# EUROPÄISCHE PATENTANMELDUNG

(11) **EP 4 512 771 A1**
(43) Veröffentlichungstag der Anmeldung: **26.02.2025**
(21) Anmeldenummer: 24191488.6
(22) Anmeldetag: 29.07.2024
(51) Int. Cl.: C01B 32/21

(54) **VERFAHREN ZUR ERHÖHUNG DER AUSBEUTE AN VERRUNDETEN GRAPHITARTIKELN**

(30) Priorität: 23.08.2023 DE 102023122651
(71) Anmelder: Netzsch Trockenmahltechnik GmbH, 63457 Hanau (DE)
(72) Erfinder: Höfels, Christian, 63457 Hanau (DE); Schöbel, Patrick, 60596 Frankfurt am Main (DE); Winter, Frank, 63165 Mühlheim am Main (DE)
(74) Vertreter: Misselhorn, Hein-Martin

(57) **Zusammenfassung**

Die Erfindung betrifft ein Verfahren zur Herstellung von durch Prallwirkung verrundeten Graphitpartikeln bestimmter, unterschiedlicher Feinheitsklassen, mit Hilfe mehrerer hintereinandergeschalteter Sphärosichter, wobei das zu verrundende Graphitmaterial vorzerkleinert wird, und dann ein erster Sphärosichter hieraus durch Faltung sphäroidisiertes Graphitmaterial einer ersten Feinheitsklasse herstellt, das als Endprodukt aus dem Verfahren ausgeschleust wird, und gleichzeitig Graphitmaterial ausscheidet, das überwiegend nicht zu Graphitmaterial dieser ersten Feinheitsklasse verarbeitet werden kann, weil es zu weit zerkleinert ist, wobei das ausgeschiedene, zu weit zerkleinerte Graphitmaterial einem zweiten Sphärosichter zugeführt wird, der hieraus durch Faltung sphäroidisiertes Graphitmaterial einer zweiten, feineren Feinheitsklasse herstellen kann, das ebenfalls als Endprodukt aus dem Verfahren ausgeschleust wird.

## Beschreibung

Die Erfindung betrifft ein Verfahren zum Verrunden von Graphitpartikeln, mit dem eine höhere Ausbeute an verrundeten Graphitpartikeln erreicht werden kann, bei kleinerer Ausschussmenge.

Diese Verrundung wird auch als Sphäroidisierung bezeichnet.

### TECHNISCHER HINTERGRUND

Lithiumionen-Batterien sind aktuell der Stand der Dinge, wo Akkumulatoren gebraucht werden, um elektrische Geräte anzutreiben - vom Laptop über Handwerkzeuge bis hin zu Automobilen.

Es ist Stand der Technik, Lithiumionen-Batterien mit einer Anode aus Graphit auszustatten. Der Graphitanode kommt zum einen die Aufgabe zu, Strom zu leiten und nach außen abzugeben, wozu Graphit von Haus aus bestens geeignet ist. Darüber hinaus fließen ihr bei jeder Stromentnahme aus der Akkuzelle über deren Elektrolyte Li-Ionen zu, die sie in ihrer Gitterstruktur zu speichern hat.

Neben der chemischen Reinheit spielt die Morphologie des Graphits eine entscheidende Rolle.

Für die Anwendung als Anodenmaterial ist sphärischer Graphit (SPG) ideal. Dessen glatte, deutlich weniger anisotrope und daher allseits aufnahmebereite Oberfläche ist gut dazu in der Lage, effektiv mit den im Anodenmaterial zu speichernden Li-Ionen zu interagieren und dadurch eine hohe Anodenbeladbarkeit zu bieten. Darüber hinaus neigt sphärischer Graphit weniger zum Abblättern und dem damit einhergehenden irreversiblen Kapazitätsverlust, sodass sich eine höhere Lebensdauer erreichen lässt. Insgesamt lässt sich bei der Verwendung sphärischen Graphits damit eine höhere Energiedichte gepaart mit einer längeren Lebensdauer erreichen.

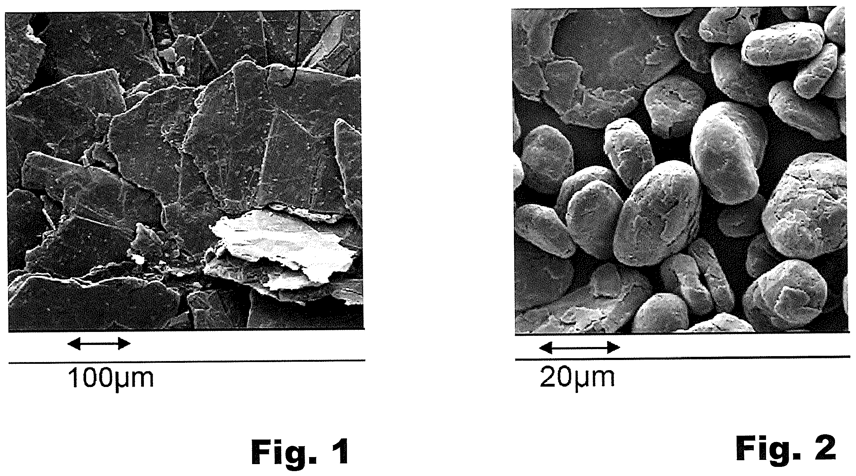

In der Natur tritt Graphit unter anderem als im Gestein verteilter sog. Flockengraphit auf, wie ihn die Fig. 1 zeigt.

Unbehandelter Flockengraphit mit seiner geschichteten Morphologie zeigt ausgeprägte Basalebenen. Das sind die Ebenen, die parallel zur Kristallstruktur des Graphits verlaufen. Entlang dieser Ebenen stellt Graphit einen sehr guten thermischen sowie auch elektrischen Leiter dar, während Graphit quer zu den Basalebenen- also zwischen den einzelnen Ebenen - als thermischer sowie auch elektrischer Isolator angesehen werden kann. Flockengraphit zeigt also eine ausgeprägte Anisotropie.

Aus diesem Grunde muss Flockengraphit aufgearbeitet werden, um hieraus den benötigten sphärischen Graphit entstehen zu lassen. Denn letzterem ist diese Basalproblematik weitgehend fremd. Er eignet sich daher wesentlich besser für elektrische Anwendungen. Die Fig. 2 vermittelt einen Eindruck davon, wie sphäroidisiertes Graphitmaterial der Feinheitsklasse SPG 20 aussieht.

Andere in der Praxis oft nachgefragte Feinheitsklassen sind die Feinheitsklassen SPG 22, 18 und 10. Wie der Fachmann weiß, spricht man z. B. dann von der Feinheitsklasse SPG 20, wenn der d₅₀ des Materials 20 µm beträgt, also 50 % der das Graphitmaterial ausmachenden Partikel einen kleineren Äquivalenzdurchmesser als 20 µm aufweisen. Sinngemäß Gleiches gilt für die anderen Feinheitsklassen.

Die entsprechende Aufarbeitung ist im Stand der Technik bekannt, wenngleich es sich um eine noch recht junge Technologie handelt. Sie wird Sphäroidisierung genannt.

Die Sphäroidisierung wird nicht etwa durch Mahlen oder Rundschleifen einzelner Partikel des Flockengraphits erreicht, sondern durch mehrfache sog. Faltung der Graphitflocken. Die Faltung wird erreicht, indem man von einem Trägergasstrom bzw. Prozessgasstrom getragene Graphitflocken wiederholt mit Hindernissen kollidieren lässt, mit einer kinetischen Energie, die so gewählt ist, dass die Graphitpartikel nicht zertrümmert werden, sondern nur gefaltet, also deformiert.

Ein gängiges Durchlaufverfahren zur Sphäroidisierung von Graphit ist die kaskadierende Hintereinanderschaltung von ca. 20 bis 30 Sichtermühlen, die mit einem extern erzeugten Prozessgasstrom beaufschlagt werden. Zwischen je zwei in der Kaskade aufeinander folgender Sichtermühlen sind ein zusätzlicher Sichter, ein Filter und ein Gebläse vorgesehen. Diese Sichtermühlen laufen im kontinuierlichen Betrieb, wie folgt:
Die erste Sichtermühle in der Kaskade wird kontinuierlich mit unbehandeltem "Rohgraphit" gespeist, erst der letzten Sichtermühle in der Kaskade kann der in der gewünschten Korngröße verrundete Graphit entnommen werden, also das Nutzgut, d. h. das Graphitmaterial der gewünschten Feinheitsklasse.

Die gewünschte Verrundung und Feinheitsklasse wird durch die einzelnen Sichtermühlen schrittweise angenähert.

Ist das zunächst noch unbehandelte Graphit in der ersten Sichtermühle einen ersten Schritt weit verrundet worden, sodass es eine gewisse Größe unterschreitet, wird es zwangsläufig aus dieser ausgetragen, zusammen mit dem beim Verrunden unvermeidlich entstehenden Feingut. Sodann wird es einer weiteren Sichtung und Filterung unterzogen, um das Feingut (also Partikel, die zur Zielerreichung schon zu klein sind) und das weiterverwendbare, einem nächsten Verrundungsschritt zu unterziehende Graphitmaterial zu trennen. Das Feingut wird verworfen. Das verbleibende Graphitmaterial wird dann der nächstfolgenden Sichtermühle in der Kaskade zugeführt, die es dem nächsten Verrundungsschritt unterzieht und erneut austrägt, sobald es eine gewisse kleinere Größe erreicht hat.

Dieses Verfahren ist wegen seiner tief gestaffelten Kaskadierung unter Beteiligung unterschiedlicher Anlagenkomponenten in der Praxis nur schwer zu steuern. Das verworfene Feingut fällt als nicht länger brauchbares Gemisch aus unterschiedlichsten Partikelgrößen an.

Ein verbessertes Sphäroidisierungsverfahren ist kürzlich von der Firma Hosokawa Alpine, Augsburg beschrieben worden, in der Fachzeitschrift Carbon 201 (2023) 847 - 855.

Zum Zwecke einer effizienteren Sphäroidisierung wird folgendes Batch-Verfahren vorgeschlagen:
Zunächst wird das Rohgraphit in einer Sichtermühle einem echten Mahlvorgang unterzogen, um es so vor zu zerkleinern und Graphitflocken zu erzeugen, die klein genug sind, um daraus in einem einzigen nachfolgenden Sphäroidisierungsschritt sphärisches Graphit der gewünschten Qualität bzw.

Feinheitsklasse erzeugen zu können. Das so vorgemahlene Graphitmaterial wird dann portionsweise in eine nunmehr spezielle Sichtermühle eingebracht.

Diese ist mit Einbauten versehen, die die Graphitpartikel einer multiplen Faltung unterziehen und dadurch sphäroidisieren, anstatt sie unnötig zu zertrümmern. Diese Sichtermühle erzeugt im Betrieb intern eine starke turbulente Strömung und kommt daher nach eigenem Bekunden ohne einen extern erzeugten Prozessgasstrom aus. Nach einer bestimmten Behandlungszeit ist der gewünschte Sphäroidisierungsgrad erreicht. Die spezielle Sichtermühle wird nun entladen. Die so erhaltende Graphitmischung wird einem Sichter zugeführt, der die fertigen, sphärischen Graphitpartikel vom damit einhergehenden, zu verwerfenden Feingut trennt.

Dieses Verfahren ist gut steuerbar und verspricht auch einen guten Durchsatz. Sein Nachteil ist, dass eine beträchtliche Menge des eingesetzten Rohgraphits als Feingut anfällt, das zu kleinteilig ist, um weitere Verwendung zu finden, und daher verworfen wird.

### DAS DER ERFINDUNG ZUGRUNDE LIEGENDE PROBLEM

Der Erfindung liegt das Problem zugrunde, ein Verfahren zur Sphäroidisierung anzugeben, das sich gut steuern lässt und gleichzeitig das eingesetzte Graphitmaterial besser ausnutzt, also weniger zu verwerfendes Feingut hinterlässt und eine höhere Ausbeute an Nutzgut bietet.

### DIE ERFINDUNGSGEMÄSSE LÖSUNG

Erfindungsgemäß wird dieses Problem durch ein Sphäroidisierungsverfahren nach Anspruch 1 gelöst.

Es handelt sich um ein Verfahren zur Herstellung von durch Prallwirkung verrundeten Graphitpartikeln bestimmter, unterschiedlicher Feinheitsklassen unter Verwendung einheitlich vorzerkleinerten Rohgraphits.

Hierbei kommen mehrere hintereinandergeschaltete Sphärosichter zum Einsatz.

Das Verfahren beginnt damit, dass das zu verrundende Graphitmaterial vorzerkleinert wird, derart, dass es geeignet ist, um daraus die gröbste der verschiedenen mittels des erfindungsgemäßen Verfahrens herzustellenden Feinheitsklassen zu erzeugen.

Dann wird der erste Sphärosichter mit dem vorzerkleinerten Rohgraphit beschickt. Er stellt hieraus durch Faltung sphäroidisiertes Graphitmaterial einer ersten Feinheitsklasse her. Dieses Graphitmaterial wird nach der Batchzeit direkt aus dem ersten Sphärosichter als Nutzgut, d. h. als Endprodukt, ausgeschleust, durchläuft also keinen weiteren Sphärosichter.

Über sein Sichterrad scheidet der erste Sphärosichter noch während der Batchlaufzeit Feingut aus, das überwiegend nicht zu Graphitmaterial dieser ersten Feinheitsklasse verarbeitet werden kann, für deren Herstellung er zuständig ist. Dies deshalb, weil die Partikel dieses Feinguts zu fein sind. Dieses Graphitmaterial, das das Feingut ausmacht, mag zu einem Teil schon aus der Vorvermahlung stammen, es besteht aber zu einem Teil auch aus Bruch, der unerwünscht beim Verrunden im ersten Sphärosichter entstanden ist.

Das als Feingut ausgeschiedene Graphitmaterial wird einem zweiten Sphärosichter zugeführt, der hieraus durch Faltung sphäroidisiertes Graphitmaterial einer zweiten, feineren Feinheitsklasse herstellen kann und herstellt. Bevorzugt ist es auch hier so, dass das Graphitmaterial der zweiten, feineren Feinheitsklasse nach der Batchzeit direkt aus dem zweiten Sphärosichter als Nutzgut, d. h. als Endprodukt, ausgeschleust wird. Es durchläuft dann also keinen weiteren Sphärosichter.

Der grundlegende Lösungsgedanke des erfindungsgemäßen Verfahrens besteht also darin, zur Herstellung von sphäroidisiertem Graphit unterschiedlicher Feinheitsklassen nur für die gröbste Feinheitsklasse passend vorgemahlenes Rohgraphit einzusetzen. Zur Herstellung des passenden Rohmaterials für mindestens eine feinere Feinheitsklasse macht man sich den Umstand zu nutzte, dass mit der Sphäroidisierung des Graphits der gröberen Feinheitslasse eine gewisse Weitervermahlung einhergeht, aufgrund derer Bruch entsteht. Dieser zu kleine Bruch eignet sich zwar nicht mehr zur Herstellung von Graphit der gröberen Feinheitsklasse. Er ist aber sehr gut geeignet, um zu Graphit einer feineren Feinheitsklasse verarbeitet zu werden.

Dies nicht zuletzt auch deswegen, weil ein nicht nur unwesentlicher Teil des Bruchs, der das Feingut ausmacht, schon in dem ersten Sphärosichter eine Verrundung erfahren hat, die dann durch den Bruch jäh zu Ende ging.

Im Licht dieser Überlegungen wird klar, dass der bisherige Ansatz, nämlich das Rohgraphit sehr stark vor zu vermahlen, um als Nutzgut z. B. Graphit der feinen Feinheitsklasse SPG 10 durch Verrunden herstellen zu können, anstatt erst einmal zu sehen, welche gröbere Feinheitsklasse man hieraus zunächst herstellen kann, verschwenderisch ist.

### OPTIONALE AUSGESTALTUNGSMÖGLICHKEITEN DER ERFINDUNG

Als besonders günstig hat es sich erwiesen, bei der Festlegung, wie stark vorzerkleinert oder vorgemahlen wird, nicht nur den ersten Sphärosichter im Auge zu haben, der Graphitmaterial der gröbsten Qualitätsstufe liefert. Stattdessen macht es Sinn, die Intensität, mit der vorgemahlen oder vorzerkleinert wird, so einzustellen, dass mehr als 50 Gew.-% des auf den ersten Sphärosichter aufgegebenen Graphitmaterials über dessen Sichterrad ausgeschieden werden und dann auf den zweiten Sichter aufgegeben werden können, der Graphitmaterial einer feineren Feinheitsklasse herstellt.

Eine andere, besonders günstige Gestaltungsoption liegt darin, dass die Schlägerflächen mindestens eines Sphärosichters derart vergrößert sind, dass der Quotient aus dem Nettovolumen der Sichterkammer und der Schlägerfläche im Bereich zwischen 0,5 und 2,0 liegt. In manchen Fällen wird hierbei eine Toleranz von +/- 10 % zulässig sein, bevorzugt werden die genannten Grenzen jedoch voll oder zumindest im Wesentlichen eingehalten.

Dabei wird als Nettovolumen der Sichterkammer das Gesamtvolumen der Sichterkammer abzüglich des Hüllvolumens des Sichterrades verstanden.

Als Schlägerfläche wird die Fläche der Schläger verstanden, die in Umfangsrichtung eine Stirnfläche bildet, auf die Graphitpartikel aufprallen und dadurch gefaltet werden.

Auf diese Art und Weise kann der Prozess des Sphäroidisierens beschleunigt werden, da mehr Energie auf das zu sphäroidisierende Gut aufgegeben werden kann, ohne die Drehzahl erhöhen zu müssen, somit die Prallintensität zu vergrößern und dadurch den Anteil an entstehendem Feingut zu erhöhen.

Eine andere Ausgestaltungsoption ist es, den Sichterraddurchmesser soweit zu verringern, dass der Quotient aus dem (wie eben definierten) Nettovolumen der Sichterkammer und dem Hüllvolumen des Sichterrades zwischen 4,2 und 6,5 liegt. In manchen Fällen wird hierbei eine Toleranz von +/-10 % zulässig sein, bevorzugt werden die genannten Grenzen jedoch voll oder zumindest im Wesentlichen eingehalten.

Hierdurch wird der Raum vergrößert, in dem das zu sphäroidisierende Material umläuft. Das erlaubt eine höhere Zuladung und erhöht gleichzeitig die Mobilität des zu sphäroidisierenden Materials im Sichterraum, was sich positiv auf den Faltungsprozess und seine Ausbeute auswirkt.

### FIGURENLISTE

- Figur 1: zeigt als Flockengraphit vorliegendes Rohgraphit.
- Figur 2: zeigt sphäroidisiertes Graphit der Feinheitsklasse SPG 22.
- Figur 3: veranschaulicht ein wichtiges Detail eines der hier bevorzugt zum Einsatz kommenden Sphärosichters.
- Figur 4: zeigt ein dem bisherigen Konzept der Anmelderin entsprechendes Vergleichsbeispiel für ein nichterfindungsgemäßes Verfahren, um einen Ausbeutevergleich mit dem erfindungsgemäßen Verfahren zu erlauben.
- Figur 5: zeigt ein erstes Ausführungsbeispiel der Erfindung.
- Figur 6: zeigt ein zweites Ausführungsbeispiel der Erfindung.

### AUSFÜHRUNGSBEISPIELE

### MÜHLEN UND SICHTERMÜHLEN

Zur Durchführung des erfindungsgemäßen Verfahrens kommt eine dem eigentlichen Verrundungsprozess vorgeschaltete Mühle zum Einsatz. Die Mühle zerkleinert das Rohgraphit und homogenisiert es meist auch - in dem Sinne, dass die Unterschiede der Korngrößen, die in der nachfolgend zu sphäroidisierenden Graphitpartikelmischung anzutreffen sind, weniger ausgeprägt sind.

Gerade mit Blick auf Letzteres kommt als vorgeschaltete Mühle bevorzugt eine Sichtermühle zum Einsatz.

Eine Sichtermühle im hier angesprochenen Sinne vereint eine mechanische Prallmühle mit einem integrierten dynamischen Windsichter.

Eine solche Sichtermühle zeichnet sich dadurch aus, dass in ihrer Sichterkammer ein Sichterrad umläuft und in der Sichterkammer ein starker Kreiswirbel entsteht. Die zu mahlenden Graphitpartikel werden bei ihrem Eintritt in die Sichterkammer vom Kreiswirbel mitgerissen. Sie erfahren dadurch starke Zentrifugalkräfte, die die noch zu großen Partikel im Wesentlichen in einem Bereich halten, der radial weit genug vom Sichterrad entfernt ist, um diese Partikel in das angeströmte Sichterrad auszutragen und von dort aus der Sichtermühle heraus zu befördern. Die Graphitpartikel kollidieren auf ihrem turbulenten Lauf durch die Sichterkammern mit den Schlägern und den Prallflächen und werden an diesen zertrümmert. Graphitpartikel, die durch ein oder mehrfache Zertrümmerung klein genug geworden sind, können von den an ihnen angreifenden, nur noch geringeren Zentrifugalkräften nicht mehr dauerhaft vom Sichterrad ferngehalten werden, sondern werden durch die Strömung in dessen Inneres ausgetragen und dann ausgeschieden.

Eine für diesen Einsatzfall besonders gut geeignete Sichtermühle ist beispielsweise das Model CSM 900 der Anmelderin.

### SPHÄROSICHTER

Das erfindungsgemäße Verrunden zeichnet sich dadurch aus, dass die Graphitpartikel wiederholt gefaltet werden und dadurch ihre runde Gestalt erhalten. Dass dabei auch einiger Bruch auftritt, liegt in der Natur der Sache. Bruch ist nicht beabsichtigt, aber auch nicht völlig vermeidbar. Man kann aber sagen, dass die Graphitpartikel ihre verrundete Form gerade nicht durch einen Mahlvorgang erhalten.

Bruch wird zusammen mit anderen zu kleinen Partikeln, die eventuell noch aus der Vorvermahlung stammen, über das Innere des Sichterrades ausgetragen und bildet das sog. Feingut. Dieses Feingut zeichnet sich dadurch aus, dass es zu klein ist, um daraus noch Graphitmaterial der augenblicklich in dem betreffenden Sphärosichter in Verrundung begriffenen Feinheitsklasse herzustellen.

Die erfindungsgemäß zum Einsatz kommenden Sphärosichter sind von ihrem grundsätzlichen Aufbau her Sichtermühlen, kommen aber modifiziert und/oder modifiziert betrieben zum Einsatz. Eine wesentliche Modifikation ist, dass ein Sphärosichter mit einem gegenüber einer Sichtermühle verringertem Prozessgasstrom arbeitet. Der Prozessgasstrom eines Sphärosichters liegt im Regelfall bei 30 Vol-% bis 10 Vol-% des Prozessgasstroms einer im Wesentlichen baugleichen Sichtermühle.

Idealerweise ist ein solcher Sphärosichter im Wesentlichen so aufgebaut, wie das in der DE 10 2020 100 907 A1 der heutigen Anmelderin beschrieben wird, die hiermit zum Gegenstand dieser Anmeldung gemacht wird.

Erfindungsgemäß ist es allerdings, bevorzugt die von der genannten Patentanmeldung beschriebenen Sphärosichter in konstruktiv modifizierter Form zum Einsatz zu bringen - so, wie das gleich noch näher erläutert wird.

Wichtig ist, dass die kinetische Energie, mit der die Graphitpartikel in der Sichterkammer des Sphärosichters umlaufen, gegenüber dem Sichtermühlenbetrieb soweit herabgesetzt wird, dass die in der Sichterkammer umlaufenden Graphitpartikel durch die nach wie vor stattfindenden Kollisionen mit den eingebauten Schlägern und Prallflächen überwiegend nur gefaltet und überwiegend nicht weiter zertrümmert werden.

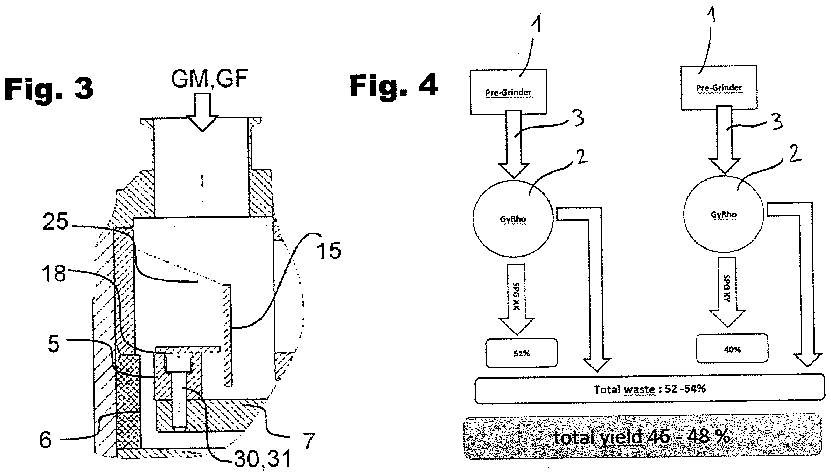

Um dennoch zu einer möglichst effektiven Faltung der Graphitpartikel zu kommen, hat es sich als besonders vorteilhaft erwiesen, zur Durchführung des erfindungsgemäßen Verfahrens die Höhe der Schläger 5 zu vergrößern, die gut in Fig. 3 (entspricht Fig. 3B der DE 10 2020 100 907) zu erkennen sind. Hierdurch wird im Vergleich zu den Sichtermühlen und der hiervon abgeleiteten DE 10 2020 100 907 die Schlagfläche größer. Es nimmt also die Fläche zu, die für einen Frontalaufprall zur Verfügung steht; wenn der jeweilige Schläger 5 von der Schraube 30 gehalten in der Sichterkammer kreist und dabei mit den Graphitpartikeln kollidiert.

Idealerweise wird die Höhe der Schläger, die bei Sichtermühlen und der DE 10 2020 1000 907 je nach Typ zwischen 10 mm und 100 mm liegt, bei dem erfindungsgemäßen Sphärosichter um 75 % bis 110 % vergrößert.

Bevorzugt ist es dann so, dass mehr als 45 % der Höhe der Schläger in radialer Richtung gesehen auf der Höhe der Vertikalspalte des Sichterrades liegt, durch die das Feingut ausgetragen wird.

Die Höhe der Prallfläche 6 wird optional entsprechend angepasst.

Die Vergrößerung der Schlägerfläche hat zur Folge, dass mehr Graphitteilchen pro Zeiteinheit einen Aufprall erfahren, der sie wieder ein Stück weiter verrundet. Dadurch kann mehr Energie pro Zeiteinheit aufgebracht werden, ohne den einzelnen Aufprall aggressiver zu machen und verstärkt unerwünschten Bruch herbeizuführen. Dadurch wird eine schnellere Verrundung erreicht. Im Batchbetrieb sinkt dadurch die Bearbeitungszeit pro Batch.

Darüber hinaus hat es sich als günstig erwiesen, den nicht zuletzt von Fig. 3B der DE 10 2020 100 907 A1 in Großdarstellung gezeigten Abdeckring 18 entfallen zu lassen.

### ERSTES KONKRETES AUSFÜHRUNGSBEISPIEL UND VERGLEICHSBEISPIEL

Die Fig. 3 zeigt das Sphäroidisierungsverfahren, wie es bisher unter Einsatz der aus der DE 10 2020 100 907 A1 bekannten Sphärosichter der hiesigen Anmelderin praktiziert wird und entsprechend der obigen Darlegungen (die die Erkenntnis von haus intern zum Thema durchgeführten Versuchen sind) in mutmaßlich mehr oder minder ähnlicher Form auch schon von der Fa. Hosokawa Alpine propagiert worden ist.

Handelsübliches sphäroidisiertes Graphitmaterial (SPG) einer bestimmten Qualitätsklasse wird auf einer eigenen, eigens hierfür eingestellten Anlage erzeugt.

Soll beispielsweise Graphitmaterial der Feinheitsklassen SPG 20 und SPG 10 erzeugt werden, dann geschieht das auf zwei völlig unabhängig voneinander eingerichteten und betriebenen Anlagen, wie sie die Fig. 4 zeigt.

Um Graphitmaterial der Feinheitsklasse SPG 10 zu produzieren, wird Rohgraphit mit einer Sichtermühle 1, etwa einer Netzsch CSM 900, so zu einem d₅₀ = 10 um vorgemahlen, dass die Graphitpartikel klein genug sind, um hieraus durch bloße Faltung mit Hilfe eines der genannten Sphärosichter 2 Graphitmaterial der Feinheitsklasse SPG 10 herstellen zu können.

Zu diesem Zweck wird das vorgemahlene Rohgraphit 3 chargenweise auf den Sphärosichter 2 gegeben. Es läuft eine vorbestimmte Zeit in der Sichterkammer um, die so bemessen ist, dass die noch in der Sichterkammer befindlichen Graphitpartikel am Ende der Laufzeit so verrundet sind, dass sie den Anforderungen der Qualität SPG 10 entsprechen. Während des Umlaufs wird in der oben beschriebenen Art und Weise über das Sichterrad permanent Feingut (also für SPG 10 zu kleine Partikel) abgezogen und verworfen.

In entsprechender Art und Weise wird - völlig unabhängig davon
- auf der zweiten Linie vorgegangen, auf der Graphitmaterial der Feinheitsklasse SPG 20 hergestellt wird.

Bei einem Einsatz von 1.233 kg/h Rohgraphit führt das zu einer Ausbeute von 661 kg/h, also einer Gesamtausbeute von 46,4 %.

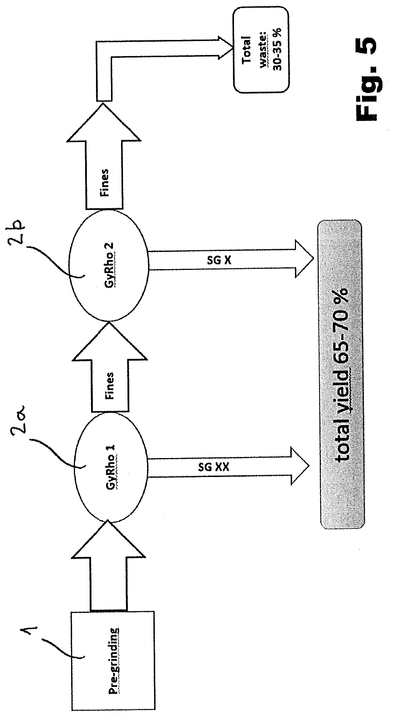

Erfindungsgemäß wird anders vorgegangen, nämlich so, wie das die Fig. 5 zeigt.

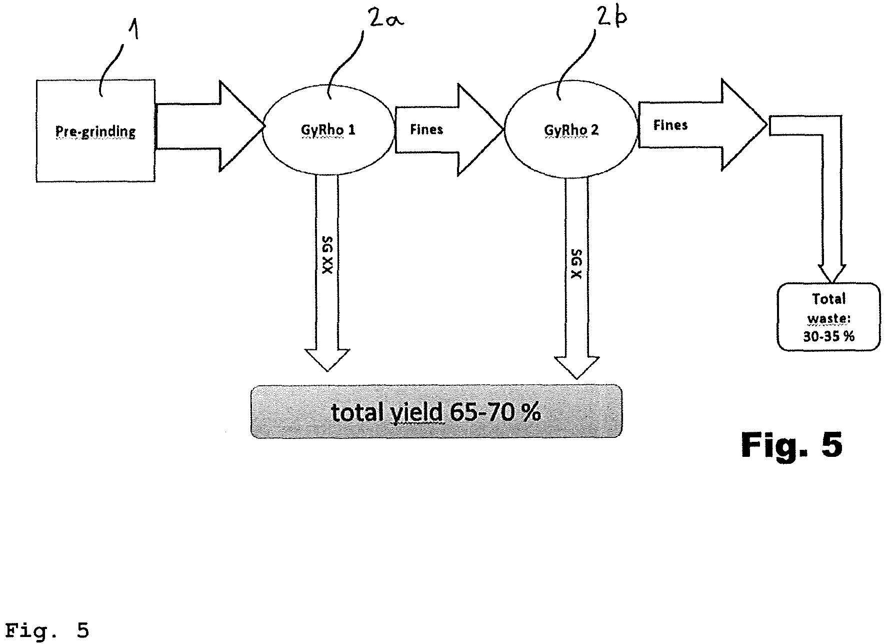

Es kommt eine Anlage aus einer vorgeschalteten Sichtermühle und einem dieser meist unmittelbar nachgeschalteten Sphärosichter zu Einsatz, dem wiederum ein zweiter Sphärosichter nachgeschaltet ist. Vorzugsweise sind die beiden Sphärosichter identisch bzw. baugleich, werden jedoch mit unterschiedlicher Feinheitskennziffer betrieben (andere Betriebsparameter → Drehzahl, Gasmenge; anderes Sichterrad). Es gilt also, dass die Sphärosichter baugleich sind und identisch betrieben werden, soweit sich aus dem nachfolgend Gesagten nichts anderes ergibt.

Idealerweise kommen bei der Verwirklichung der Erfindung - und so auch bei diesem Ausführungsbeispiel - Sphärosichter zum Einsatz, die so gebaut sind, wie das DE 10 2020 100 907 beschreibt. Idealerweise sind diese Sphärosichter zusätzlich mit mindestens einer der oben für die DE 10 2020 100 907 beschriebenen Modifikationen versehen.

Der Rohgraphit wird hier ebenfalls vorgemahlen.

Es wird aber bei dieser Variante der Erfindung typischerweise zumindest im Wesentlichen nur auf die Partikelgröße vorgemahlen, die der fertige, sphäroidisierte Graphit der gröbsten mit dieser Anlage zu erzeugenden Feinheitsklasse haben soll, denn es kommt im Zuge des Sphäroidisierens im Regelfall nicht zu einer nennenswerten Reduktion des d₅₀ der nutzbaren Partikel, solange kein Bruch auftritt.

Im vorliegenden Fall wird also im Wesentlichen auf eine Partikelgröße d₅₀ = 20 um vorvermahlen, wenn das erste Nutzprodukt sphäroidisiertes Graphit mit diesem d₅₀ sein soll. Es findet keine Vorvermahlung statt, die derart stark zerkleinert, dass allein mittels eines der hier verwendeten Sphärosichter hieraus direkt Graphitmaterial einer feineren Feinheitsklasse verrundet werden könnte als jener, die im ersten Sphärosichter hergestellt wird.

Zur Vorvermahlung kommt eine Sichtermühle 1 zum Einsatz, idealerweise ebenfalls mit einer Netzsch CSM 900.

Erfindungsgemäß sind, wie schon gesagt, hinter einer Sichtermühle 1 mehrere Sphärosichter 2a, 2b angeordnet. Ein erster vorangehender Sphärosichter 2a wird mit passend zu der von ihm zu erzeugenden Feinheitsklasse (z. B. Rohmaterial mit einem d₅₀ von 20 um für SPG 20) vorvermahlendem Rohgraphit gespeist und zwar bevorzugt chargenweise.

Auch hier ist es so, dass das aufgegebene Graphit eine vorbestimmte Zeit in der Sichterkammer umläuft, die so bemessen ist, dass die noch in der Sichterkammer befindlichen Graphitpartikel am Ende der Laufzeit derart verrundet sind, dass sie den Anforderungen der gewünschten Qualität entsprechen, hier also Graphitmaterial der Feinheitsklasse SPG 20 erzeugt wird.

Es kann eine sinnvolle Option sein, das Sichterrad des ersten Sphärosichters mit einem 15 % bis 25 % kleineren Durchmesser auszuführen als das Sichterrad des zweiten, ansonsten meist (zumindest im Wesentlichen) baugleichen Sphärosichters.

Besonders bevorzugt ist es, wenn der erste Sphärosichter (genauer: seine Schläger) mit einer Drehzahl betrieben wird, die während jeder Batchbearbeitung variiert bzw. im Laufe einer Batchbearbeitung von 100 % der Anfangsdrehzahl ausgehend, die am Anfang der Batchbearbeitung gefahren wird, auf eine Geschwindigkeit von 70 % bis 40% hiervon herabgesetzt wird. Dadurch kann gesteuert werden, dass der erste Sphärosichter einerseits auch wirklich Graphitmaterial der gewünschten Feinheitsklasse erzeugt. Gleichzeitig oder alternativ kann hierdurch gesteuert werden, dass der erste Sphärosichter über das Innere seines Sichterrades auch wirklich Feingut in einer Art und/oder Menge ausgibt, mit dem der zweite Sphärosichter etwas anfangen kann.

Während des Umlaufs wird in der oben beschriebenen Art und Weise über das Sichterrad permanent Feingut (also in diesem Beispiel für SPG 20 zu kleine Partikel) abgezogen. Meist besteht dieses Feingut aus Partikeln, die schon nach der Vorvermahlung zu klein waren, und solchen Partikeln, die bei der Sphäroidisierung in diesem ersten Sphärosichter zu Bruch gegangen und dadurch zu klein geworden sind.

Erfindungsgemäß wird das Feingut nicht verworfen, sondern direkt oder über eine Silozwischenlagerung auf einen nachfolgenden Sphärosichter 2b gegeben. Dieser Sphärosichter 2b unterzieht das aufgegebene Material nochmal der schon beschriebenen Verrundung durch Faltung und produziert so Graphitmaterial einer feineren Feinheitsklasse, idealerweise einer Feinheitsklasse, die mehrere, idealerweise mindestens 5 volle um Feinheitsstufen unter der letzten zuvor erzeugten Feinheitsklasse liegt, hier etwa Graphitmaterial der Feinheitsklasse SPG 10. Hierbei anfallendes Feingut wird erneut über das Sichterrad abgezogen.

Bevorzugt ist es allerdings so, dass der zweite Sphärosichter (bzw. seine Schläger), anders als der erste Sphärosichter, über die ganze Batchbearbeitung hinweg mit 100 %-iger Drehzahl betrieben wird. Dabei kann es allerdings sinnvoll sein, dass die den zweiten Sphärosichter durchfließende Gasmenge im Vergleich zu der Gasmenge, die den ersten Sphärosichter durchfließt, um 10 Vol-% bis 40 Vol-% reduziert wird.

Das Graphitmaterial mit der jeweils gewünschten Feinheit wird am Ende jeweils aus dem Sichterraum des betreffenden Sphärosichters abgezogen, z. B. so, wie das die DE 10 2020 100 907 beschreibt.

Um den Prozess fein steuern zu können, werden vorteilhafterweise nur zwei Sphärosichter in der geschilderten Art und Weise hintereinandergeschaltet. Um höhere Massen bearbeiten zu können, werden typischerweise mehrere solcher erfindungsgemäße Anlagen parallelgeschaltet.

Die Ausbeute ist signifikant höher. Bei einem Einsatz von 960 kg/h Rohgraphit erhält man 435 kg/h Graphitmaterial der Feinheitsklasse SPG 20 und 167 kg/h Graphitmaterial der Feinheitsklasse SPG 10. Das entspricht einer Gesamtausbeute von 62,8 %.

### ZWEITES KONKRETES AUSFÜHRUNGSBEISPIEL

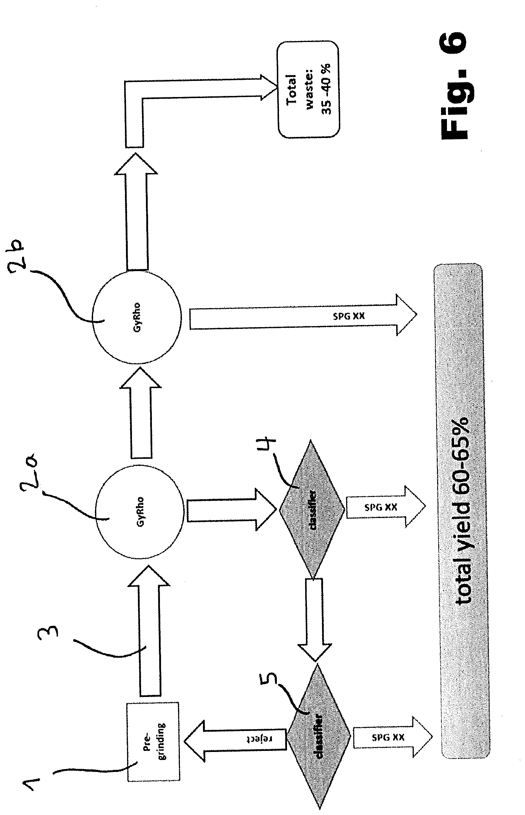

Das zweite erfindungsgemäße Ausführungsbeispiel wird durch die Fig. 6 gezeigt. Bis auf die nachfolgend namhaft gemachten Unterschiede entspricht der Aufbau dem vorstehend geschilderten ersten Ausführungsbeispiel. Daher gilt das dort Gesagte entsprechend auch hier, solange sich aus den nachfolgend benannten Unterschieden nichts anderes ergibt.

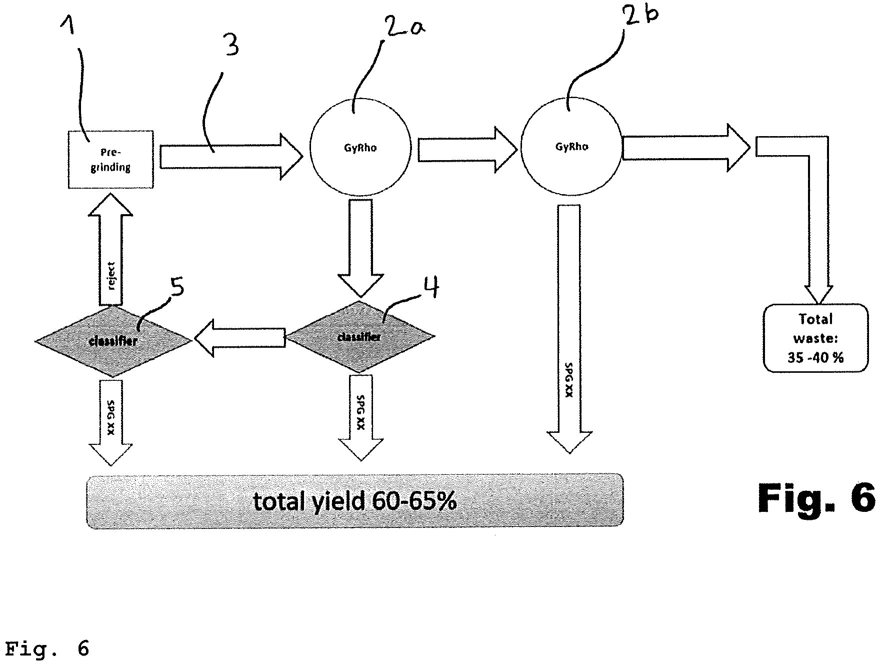

Ein Unterschied liegt hier darin, dass der erste Sphärosichter 2a mit nur gröber vorzerkleinertem Rohgraphit beaufschlagt wird. Um mit dieser Anlage auf dem ersten Sphärosichter sphäroidisiertes Graphit einer bestimmten, gröbsten Feinheitsklasse d₅₀ herzustellen, wird der d₅₀ des vorzerkleinerten Rohgraphits vorzugsweise um 10 % bis 30 % höher angesetzt als die betreffende Feinheitsklasse. Wenn also, wie in diesem Ausführungsbeispiel, Graphit der Feinheitsklasse SPG 22 erzeugt werden soll, dann wird auf einen d₅₀ von etwa 24 um bis etwa 28 um vorzerkleinert. Das hat einen höheren Durchsatz in der Vorvermahlung zur Folge und eine bereitere Korngrößenverteilung.

Dann wird der erste Sphärosichter so betrieben, dass er als Produkt ein Gemisch aus zwei Feinheitsklassen, z. B. Graphitmaterial der Feinheitsklassen SPG 18 und SPG 22, produziert.

Eine weitere Besonderheit bei diesem Ausführungsbeispiel kann sein, dass das Sichterrad des ersten Sphärosichters 2a mit einem kleineren Durchmesser ausgeführt ist als das Sichterrad des nachfolgenden Sphärosichters 2b. In den meisten Fällen läuft es mit einer höheren Drehzahl um als das Sichterrad des nachfolgenden Sphärosichters.

Das hat zur Folge, dass der Sichterraum des ersten Sphärosichter 2a eine (massenmäßig) vergrößerte Ladung aus vorzerkleinertem Graphit aufnehmen und einer Verrundung unterziehen kann.

Auch bei diesem Ausführungsbeispiel ist es besonders bevorzugt, wenn der erste Sphärosichter 2a (genauer: seine Schläger) mit einer Drehzahl betrieben wird, die während jeder Batchbearbeitung variiert, hieraus ergeben sich die oben genannten Vorteile.

Die beschriebene Modifikation des Sichterrades des ersten Sphärosichters 2a führt dazu, dass dessen Trenngrenze abnimmt. Das spielt aber wegen der hier zusätzlich vorgesehenen Sichter 4 und 5 (mehr dazu sogleich) keine Rolle. Sie kompensieren diesen "Nachteil" - der es ermöglicht, im ersten Sphärosichter 2a unter idealer Ausnutzung des aufgegebenen, weniger weit vorzerkleinerten Rohgraphits nutzbares Graphitmaterial unterschiedlicher Feinheitsklassen zu produzieren, z. B. der Feinheitsklassen SPG 18 und SPG 22.

Dieses Produkt wird unmittelbar nach dem ersten Sphärosichter 2a ausgeschleust. Um hieraus das Nutz- bzw. Endprodukt zu gewinnen, wird das Produkt noch weiterbehandelt. Zu diesem Zweck kommt ein erster zusätzlicher, separater Sichter 4 zum Einsatz. Der Sichter scheidet nun aus dem Produkt im Wesentlichen die verrundeten Graphitpartikel ab, die der Feinheitsklasse SPG 18 angehören. Somit ist ein Teil des Nutz- bzw. Endprodukts Graphitmaterial der Feinheitsklasse 18.

Der aus der eben beschriebenen Sichtung hervorgehende Rest aus gröberem Graphitmaterial wird einem weiteren, separaten Sichter zugeführt. Er wird so nochmals separiert - nämlich in eine Charge aus Graphitmaterial, das so grob ist, dass es nochmals der Vorzerkleinerung oder Vorvermahlung zugeführt werden kann, und in eine zweite Charge, die ein zweites Nutz- bzw. Endprodukt bildet, nämlich Graphitmaterial der Feinheitsklasse SPG 22.

Das Feingut, das über das Innere des Sichterrades des ersten Sphärosichters 2a abgezogen wird, wird nicht verworfen. Stattdessen wird es in der schon für das erste Ausführungsbeispiel beschriebenen Art und Weise von einem zweiten Sphärosichter 2b weiterverarbeitet, zu Graphitmaterial einer weiteren, feineren Feinheitskasse, die, wie schon oben namhaft gemacht, oft mehrere Feinheitsstufen unter der letzten zuvor erzeugten Feinheitsklasse liegt - hier beispielsweise zu Graphitmaterial der Feinheitsklasse SGP 10.

Um den Prozess fein steuern zu können, werden vorteilhafterweise auch bei diesem Ausführungsbeispiel nur zwei Sphärosichter in der geschilderten Art und Weise hintereinandergeschaltet. Um höhere Massen bearbeiten zu können, werden typischerweise mehrere solcher erfindungsgemäße Anlagen parallelgeschaltet.

Auch bei diesem Verfahren ergibt sich eine beachtliche Steigerung der Ausbeute:
Bei einem Einsatz von 894 kg/h Rohgraphit erhält man 137 kg/h Graphitmaterial der Feinheitsklasse SPG 22, 228 kg/h Graphitmaterial der Feinheitsklasse SPG 18 sowie 167 kg/h Graphitmaterial der Feinheitsklasse SPG 10. Das entspricht einer Gesamtausbeute von 60 %.

### BEZUGSZEICHENLISTE

- 1: Sichtermühle
- 2: Sphärosichter
- 2a: erster Sphärosichter
- 2b: zweiter Sphärosichter
- 3: vorvermahlener Rohgraphit
- 4: erster zusätzlicher Sichter
- 5: zweiter zusätzlicher Sichter

## Patentansprüche

1. Verfahren zur Herstellung von durch Prallwirkung verrundeten Graphitpartikeln bestimmter, unterschiedlicher Feinheitsklassen,
mit Hilfe mehrerer hintereinandergeschalteter Sphärosichter, **dadurch gekennzeichnet, dass**
das zu verrundende Graphitmaterial vorzerkleinert wird, und dann ein erster Sphärosichter hieraus durch Faltung sphäroidisiertes Graphitmaterial einer ersten Feinheitsklasse herstellt, das als Endprodukt aus dem Verfahren ausgeschleust wird,
und gleichzeitig Graphitmaterial ausscheidet, das überwiegend nicht zu Graphitmaterial dieser ersten Feinheitsklasse verarbeitet werden kann, weil es zu weit zerkleinert ist,
wobei das ausgeschiedene, zu weit zerkleinerte Graphitmaterial einem zweiten Sphärosichter zugeführt wird, der hieraus durch Faltung sphäroidisiertes Graphitmaterial einer zweiten, feineren Feinheitsklasse herstellen kann, das ebenfalls als Endprodukt aus dem Verfahren ausgeschleust wird.

2. Verfahren zur Herstellung von durch Prallwirkung verrundeten Graphitpartikeln bestimmter, unterschiedlicher Feinheitsklassen nach Anspruch 1, **dadurch gekennzeichnet, dass** die Intensität, mit der vorgemahlen oder vorzerkleinert wird, so eingestellt wird, dass mehr als 50 Gew.-% des auf den ersten Sphärosichter aufgegebenen Graphitmaterials über dessen Sichterrad ausgeschieden werden und dann auf den zweiten Sichter aufgegeben werden können, der Graphitmaterial einer feineren Feinheitsklasse herstellt.

3. Verfahren zur Herstellung von durch Prallwirkung verrundeten Graphitpartikeln bestimmter, unterschiedlicher Feinheitsklassen nach Anspruch 1 oder 2, **dadurch gekennzeichnet, dass** zwei Sphärosichter hintereinandergeschaltet sind, von denen jeder ein Endprodukt herstellt.

4. Verfahren zur Herstellung von durch Prallwirkung verrundeten Graphitpartikeln bestimmter, unterschiedlicher Feinheitsklassen nach einem der vorhergehenden Ansprüche, **dadurch gekennzeichnet, dass** das Feingut, das vom ersten Sphärosichter ausgeschieden wird, auf den zweiten Sphärosichter aufgegeben wird, ohne es außerhalb des ersten Sphärosichters nochmals zu sichten und/oder zu filtern.

5. Verfahren zur Herstellung von durch Prallwirkung verrundeten Graphitpartikeln bestimmter, unterschiedlicher Feinheitsklassen nach einem der vorhergehenden Ansprüche, **dadurch gekennzeichnet, dass** das Produkt, das der in der Bearbeitungskette nachfolgende zweite Sphärosichter durch Verrundung herstellt, ein Graphitmaterial ist, das um mehrere Feinheitsklassen feiner ist als das Graphitmaterial des Produkts, das der erste Sphärosichter durch Verrundung herstellt.

6. Verfahren zur Herstellung von durch Prallwirkung verrundeten Graphitpartikeln bestimmter, unterschiedlicher Feinheitsklassen nach einem der vorhergehenden Ansprüche, **dadurch gekennzeichnet, dass** die Sichterradgeschwindigkeit des ersten Sphärosichters in der Bearbeitungskette während einer Batchbearbeitung variabel steuerbar ist, während die Sichterradgeschwindigkeit des nachfolgenden zweiten Sphärosichters über eine Batchbearbeitung hinweg bevorzugt konstant gehalten wird.

7. Verfahren zur Herstellung von durch Prallwirkung verrundeten Graphitpartikeln bestimmter, unterschiedlicher Feinheitsklassen nach einem der vorhergehenden Ansprüche, **dadurch gekennzeichnet, dass** der Sichterraddurchmesser des ersten Sphärosichters kleiner ist als der Sichterraddurchmesser des ihm in der Bearbeitungskette nachfolgenden zweiten Sphärosichters und/oder dass das Sichterrad des ersten Sphärosichters schneller umläuft als das Sichterrad des ihm in der Bearbeitungskette nachgeschalteten zweiten Sphärosichters.

8. Verfahren zur Herstellung von durch Prallwirkung verrundeten Graphitpartikeln bestimmter, unterschiedlicher Feinheitsklassen nach einem der vorhergehenden Ansprüche, **dadurch gekennzeichnet, dass** der erste Sphärosichter des vorzerkleinerten Rohgraphits beaufschlagt wird, dessen d₅₀ um 10 % bis 30 % höher angesetzt ist als der d₅₀ der gröbsten Feinheitsklasse, die der erste Sphärosichter als Produkt erzeugen soll.

9. Verfahren zur Herstellung von durch Prallwirkung verrundeten Graphitpartikeln bestimmter, unterschiedlicher Feinheitsklassen nach einem der vorhergehenden Ansprüche, **dadurch gekennzeichnet, dass** der erste Sphärosichter so betrieben wird, dass sich sein Zielprodukt in zwei verwendungsfertige Graphitmengen aufteilen lässt, die aus Graphitmaterial unterschiedlicher Feinheitsgrade bestehen, idealerweise SPG 18 und SPG 22.

10. Verfahren zur Herstellung von durch Prallwirkung verrundeten Graphitpartikeln bestimmter, unterschiedlicher Feinheitsklassen nach einem der vorhergehenden Ansprüche, **dadurch gekennzeichnet, dass** der erste Sphärosichter so betrieben wird, dass sein Produkt neben Graphitmaterial der zu erzeugenden Feinheitsklasse auch Graphitpartikel enthält, die über einen zusätzlichen Sichter separiert und dann nochmals auf die Vorzerkleinerung gegeben werden, zur Weiterzerkleinerung und Wiederaufgabe auf den ersten Sphärosichter.

11. Verfahren zur Herstellung von durch Prallwirkung verrundeten Graphitpartikeln bestimmter, unterschiedlicher Feinheitsklassen nach einem der vorhergehenden Ansprüche, **dadurch gekennzeichnet, dass** die Sichterradgeschwindigkeit des ersten Sphärosichters in der Bearbeitungskette während einer Batchbearbeitung variabel steuerbar ist, während die Sichterradgeschwindigkeit des nachfolgenden zweiten Sphärosichters über eine Batchbearbeitung hinweg bevorzugt konstant gehalten wird.

12. Verfahren zur Herstellung von durch Prallwirkung verrundeten Graphitpartikeln bestimmter, unterschiedlicher Feinheitsklassen nach einem der vorhergehenden Ansprüche, **dadurch gekennzeichnet, dass** mindestens ein, besser zwei Sphärosichter zum Einsatz kommen, deren Schlägerflächen vergrößert sind, dahingehend, dass der Quotient aus dem Nettovolumen der Sichterkammer und der Schlägerfläche im Bereich zwischen 0,5 und 2,0 liegt.

13. Verfahren nach einem der vorhergehenden Ansprüche zur Herstellung von durch Prallwirkung verrundeten Graphitpartikeln bestimmter, unterschiedlicher Feinheitsklassen nach einem der vorhergehenden Ansprüche, **dadurch gekennzeichnet, dass** das der Quotient aus dem Nettovolumen der Sichterkammer und dem Hüllvolumen des Sichterrades zwischen 4,2 und 6,5 liegt.

14. Vorrichtung aus mehreren Sphärosichtern zur Ausführung eines Verfahrens nach einem der vorhergehenden Ansprüche.
